# EUROPÄISCHE PATENTSCHRIFT

(11) **EP 3 196 110 B1**
(45) Veröffentlichungstag und Bekanntmachung des Hinweises auf die Patenterteilung: **15.08.2018**
(21) Anmeldenummer: 16199035.3
(22) Anmeldetag: 16.11.2016
(51) Int. Cl.: B62M 6/85, B62M 6/40, B62M 6/55, B62M 6/90

(54) **SOLARFAHRRAD**
SOLAR BICYCLE
VÉLO SOLAIRE

(30) Priorität: 21.01.2016 DE 102016100982
(43) Veröffentlichungstag der Anmeldung: 26.07.2017
(73) Patentinhaber: Jugendforschungszentrum JFZ Schwarzwald-Schönbuch e.V., 72202 Nagold (DE)
(72) Erfinder: Klein Prof. Dr., Uwe, 72218 Wildberg (DE)
(74) Vertreter: Späth, Dieter

(56) Entgegenhaltungen:
- EP-A1- 3 072 790
- WO-A1-2016/184925
- US-A- 4 516 647
- US-A- 5 237 263
- US-A1- 2012 293 050

## Beschreibung

Die Erfindung betrifft ein Solarfahrrad mit seitlich an einem oder beiden Laufrädern angeordneten Solarmodulen mit den Merkmalen des Oberbegriffs des Anspruchs 1. Der mit den Solarmodulen erzeugte Strom ist insbesondere zu einem elektrischen Hilfsantrieb des Solarfahrrads zusätzlich zu einem Muskelkraftantrieb oder auch zu einem ausschließlich elektrischen Antrieb des Solarfahrrads vorgesehen und kann dafür in einem Akkumulator gespeichert werden. Andere Verwendungen des mit den Solarmodulen erzeugten Stroms sind nicht ausgeschlossen. Bei einem ausschließlich elektrischen Antrieb kann das Solarfahrrad auch als Elektrorad aufgefasst werden.

Die Offenlegungsschrift DE 10 2013 202 854 A1 offenbart ein Solarfahrrad gemäß der Präambel des Anspruchs 1 mit einem Muskelkraftantrieb über Pedale und zusätzlich einem Elektromotor zur Unterstützung des Antriebs durch Muskelkraft, der an einen an einem Fahrradrahmen angebrachten Akkumulator angeschlossen ist. Beide Laufräder des bekannten Solarfahrrads weisen kreisförmige Scheiben auf, die seitlich an Speichen der Laufräder angebracht sind. Auf den Scheiben sind Solarmodule auf einem gedachten Kreis, d. h. alle Solarmodule mit gleichem radialen Abstand von Achsen der Laufräder angeordnet. In Umfangsrichtung sind die Solarmodule gleichmäßig verteilt mit kleinem Abstand voneinander angeordnet. Über ein Paar Schleifringe und Kohlebürsten in Naben der beiden Laufräder sind die Solarmodule der Laufräder mit dem an dem Fahrradrahmen angebrachten Akkumulator verbunden.

Es ist bekannt, dass bereits eine Teilbeschattung einer kleinen Fläche eines Solarmoduls eine erzeugte elektrische Spannung auf einen Bruchteil verringert, die von dem teilbeschatteten Solarmodul erzeugte elektrische Spannung und elektrischer Strom brechen mehr oder weniger auf nahezu null zusammen. Sind mehrere Solarmodule elektrisch in Reihe geschaltet, kann eine Teilbeschattung einer nur kleinen Teilfläche eines der Solarmodule die von allen in Reihe geschalteten Solarmodulen erzeugte elektrische Spannung und elektrischen Strom auf einen Bruchteil verringern und auf nahezu null zusammenbrechen lassen. Eine Beschattung, auch eine Teilbeschattung nur einer kleinen Teilfläche eines Solarmoduls sollte deswegen vermieden werden. Das ist jedoch nicht möglich an einem Solarfahrrad, an dessen Laufrädern seitlich Solarmodule angeordnet sind, weil abhängig von einer Drehstellung der Laufräder Rahmenstreben eines Fahrradrahmens oder Gabelscheiden einer Fahrradgabel bei seitlichem Lichteinfall Schatten auf die Solarmodule werfen. Bei Drehung der Laufräder werfen die Rahmenstreben oder Gabelscheiden periodisch Schatten auf zumindest Teilflächen der Solarmodule.

Aufgabe der Erfindung ist die negativen Auswirkungen eines Schattens von Teilen eines Solarfahrrads wie Rahmenstreben und Gabelscheiden auf eine Stromerzeugung mit Solarmodulen, die seitlich an Laufrädern des Solarfahrrads angeordnet sind, gering zu halten.

Gelöst wird diese Aufgabe durch die Merkmale des Anspruchs 1. Das erfindungsgemäße Solarfahrrad weist ein Laufrad auf, an dem seitlich Solarmodule über einen Umfang verteilt angeordnet sind. Die Solarmodule können an einem Vorder- und/oder einem Hinterrad des Solarfahrrads ein- oder beidseitig angeordnet sein. Seitlich bedeutet, dass die Solarmodule in einer gedachten Radialebene oder auf einer gedachten, mit dem Laufrad gleichachsigen Kegelfläche mit beispielsweise einem einer Schrägstellung von Speichen des Laufrads entsprechenden Kegelwinkel angeordnet sind. Über den Umfang sind die Solarmodule vorzugsweise, allerdings nicht zwingend, gleichmäßig verteilt. In Umfangsrichtung weisen die Solarmodule einen Abstand voneinander auf, der mindestens so groß wie ein Schattenwurf einer dicksten, das Laufrad seitlich überdeckenden Rahmenstrebe oder einer Gabelscheide auf das Laufrad bei seitlichem Lichteinfall breit ist. Beispielsweise bei einem Diamant- oder einem Damenrahmen sind eine Kettenstrebe, die von einem Tretlager zu einer Achse des Hinterrads führt, und eine Sattelstrebe, die von einem oberen Ende eines Sattelrohrs und einem hinteren Ende eines Oberrohrs des Fahrradrahmens zu der Achse des Hinterrads führt, seitlich des Hinterrads angeordnet und werfen bei seitlichem Lichteinfall Schatten auf das Hinterrad. Bei einem beweglichen Hinterbau eines Solarfahrrads mit gefedertem Hinterrad gilt das für die entsprechenden Streben des Hinterbaus. Ein Abstand der Solarmodule in Umfangsrichtung des Laufrads ist erfindungsgemäß so gewählt, dass ein Schatten einer Rahmenstrebe oder einer Gabelscheide bei seitlichem Lichteinfall nie gleichzeitig auf zwei in Umfangsrichtung benachbarte Solarmodule gleichzeitig fällt, sondern bei jeder beliebigen Drehstellung des Laufrads eine Rahmenstrebe oder Gabelscheide bei seitlichem Lichteinfall Schatten auf höchstens eines von zwei in Umfangsrichtung benachbarten Solarmodulen wirft. Radial zueinander am Laufrad angeordnete Solarmodule können von einer Rahmenstrebe oder Gabelscheide gleichzeitig beschattet werden. Radial angeordnet bedeutet, dass ein Solarmodul weiter innen, also näher an der Achse, oder weiter außen, d. h. näher an einer Felge, als ein anderes Solarmodul am Laufrad angeordnet ist. Mehrere Rahmenstreben, beispielsweise eine Kettenstrebe und eine Sattelstrebe, können ebenfalls Schatten auf zwei mit gleichem Abstand von einer Achse radial gleich weit beabstandete Solarmodule werfen, aber nicht auf mehr. Mit Dicke ist eine Abmessung der Rahmenstrebe oder Gabelscheide in Längsrichtung des Solarfahrrads gemeint, also eine Querabmessung der Rahmenstrebe oder Gabelscheide, die für den Schattenwurf auf das Laufrad bei seitlichem Lichteinfall maßgebend ist. Anders ausgedrückt weisen die Solarmodule in Umfangsrichtung einen Abstand voneinander auf, der mindestens so groß wie ein Umriss einer Rahmenstrebe oder Gabelscheide bei Blickrichtung quer auf das Solarfahrrad breit ist.

Die Erfindung erreicht, dass eine Rahmenstrebe eines Fahrradrahmens des Solarfahrrads oder eine Gabelscheide einer Fahrradgabel des Solarfahrrads höchstens ein Solarmodul beschattet. Das gilt für alle mit gleichem radialen Abstand von einer Radachse des Laufrads angeordneten Solarmodule. Radial zueinander angeordnete Solarmodule können von einer Rahmenstrebe oder Gabelscheide gleichzeitig beschattet werden. Dadurch wird eine negative Beeinflussung der Stromerzeugung mit den Solarmodulen durch eine Rahmenstrebe oder Gabelscheide bei seitlichem Lichteinfall klein gehalten. Alle übrigen Solarmodule erzeugen unbeeinflusst Strom.

Um mehr Solarmodule seitlich am Laufrad anordnen zu können, sieht die Erfindung radial zueinander am Laufrad angeordnete Solarmodule vor, das Laufrad weist also sowohl über den Umfang verteilt als auch radial zueinander angeordnete Solarmodule auf. Eine zur Stromerzeugung von den Solarmodulen genutzte Fläche ist dadurch vergrößert. Die Anordnung von Solarmodulen radial innerhalb oder außerhalb, also näher an einer Achse oder näher an einer Felge eines Laufrads des Solarfahrrads wird nachfolgend auch als Strang von Solarmodulen bezeichnet werden. Zudem sieht die Erfindung vor, dass radial zueinander am Laufrad angeordnete Solarmodule elektrisch in Reihe geschaltet sind. Dadurch vergrößert sich eine mit den Solarmodulen erzeugte elektrische Spannung entsprechend. Weil Rahmenstreben eines Fahrradrahmens oder Gabelscheiden einer Fahrradgabel normalerweise radial oder jedenfalls näherungsweise radial verlaufen, werden radial zueinander am Laufrad angeordnete Solarmodule von einer Rahmenstrebe oder Gabelscheide gleichzeitig beschattet, weswegen ihre elektrische Reihenschaltung die Stromerzeugung nicht stört. In Umfangsrichtung versetzte Solarmodule werden nicht gleichzeitig beschattet, so dass eine negative Beeinflussung der Stromerzeugung durch die Solarmodule bei Beschattung durch eine Rahmenstrebe oder Gabelscheide klein gehalten wird.

In Umfangsrichtung zueinander versetzte Solarmodule oder Stränge von Solarmodulen können elektrisch parallel geschaltet sein, insbesondere sind radial zueinander an einem Laufrad angeordnete Solarmodule eines Strangs elektrisch in Reihe geschaltet und mit in Umfangsrichtung versetzten Strängen elektrisch parallel geschaltet.

Eine Ausgestaltung der Erfindung sieht vor, dass radial zueinander als Strang an einem Laufrad angeordnete und elektrisch in Reihe geschaltete Solarmodule eine Diode aufweisen, die mit den radial zueinander angeordneten und elektrisch in Reihe geschalteten Solarmodulen in Reihe geschaltet ist. Die Diode lässt elektrischen Strom durch, wenn die in Reihe geschalteten Solarmodule Strom erzeugen. In umgekehrter Richtung sperrt die Diode. Die Diode vermeidet, dass ein- oder mehrere radial zueinander angeordnete, beschattete Solarmodule die Stromerzeugung anderer, in Umfangsrichtung versetzter und nicht beschatteter Solarmodule beeinträchtigt. Vorzugsweise wird eine Diode mit niedriger Freilaufspannung, also kleinem Spannungsabfall in Durchlassrichtung, verwendet, beispielsweise eine Schottky-Diode.

Um eine Seitenwindanfälligkeit des Solarfahrrads niedrig zu halten sieht eine Ausgestaltung der Erfindung vor, dass das Laufrad zwischen den Solarmodulen luftdurchlässig ist.

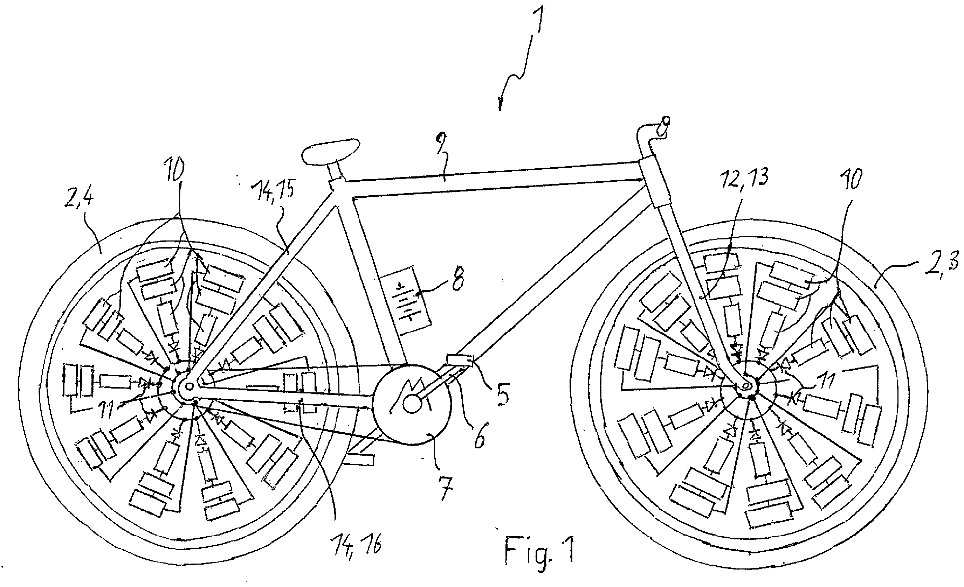

Die Erfindung wird nachfolgend anhand eines in der Zeichnung dargestellten Ausführungsbeispiels näher erläutert. Die einzige Figur zeigt ein erfindungsgemäßes Solarfahrrad in Seitenansicht. Die Zeichnung ist als vereinfachte und schematisierte Darstellung zum Verständnis und zur Erläuterung der Erfindung zu verstehen.

Das in der Zeichnung dargestellte, erfindungsgemäße Solarfahrrad 1 weist zwei Laufräder 2, nämlich ein Vorderrad 3 und ein Hinterrad 4 auf. Ein Antrieb erfolgt durch Muskelkraft über Pedale 5 an Tretkurbeln 6. Unterstützt wird der Muskelkraftantrieb von einem Elektromotor 7, der Strom aus einem Akkumulator 8 erhält, der an einem Fahrradrahmen 9 oder einem Gepäckträger (nicht dargestellt) befestigt ist.

Zu einer Stromerzeugung weisen die Laufräder 2 Solarmodule 10 auf, die an nicht gezeichneten Speichen der Laufräder 2 befestigt sind. Das heißt die Solarmodule 10 sind seitlich an den Laufrädern 2 auf gedachten, mit den Laufrädern 2 gleichachsigen Kegelflächen angeordnet, deren Kegelwinkel bzw. halber Kegelwinkel einem Winkel entspricht, mit dem die nicht gezeichneten Speichen schräg zu einer gedachten Radialfläche der Laufräder 2 verlaufen. Es sind jeweils mehrere - im Ausführungsbeispiel drei - Solarmodule 10 radial zueinander angeordnet, die elektrisch in Reihe miteinander und zusätzlich in Reihe mit jeweils einer Diode 11 geschaltet sind. Wegen des kleinen Spannungsabfalls in Durchlassrichtung verwendet das Ausführungsbeispiel der Erfindung Schottky-Dioden 11. Die radial zueinander angeordneten und elektrisch in Reihe geschalteten Solarmodule 10 werden nachfolgend auch als Stränge von Solarmodulen 10 bezeichnet werden. In einer Umfangsrichtung der Laufräder 2 sind die Solarmodule 10 verteilt angeordnet und es sind die radial angeordneten und elektrisch in Reihe geschalteten Stränge von Solarmodule 10 in Umfangsrichtung elektrisch parallel geschaltet. Über eine nicht gezeichnete Schleifringanordnung mit zwei Schleifringen und Schleifkontakten, die an Radnaben der Laufräder 2 angeordnet sind, und weiter über ebenfalls nicht gezeichnete Kabel wird ein von den Solarmodulen 10 erzeugter elektrischer Strom zum Akkumulator 8 geleitet. Der Akkumulator 8 wird dadurch bei Sonnenschein während einer Fahrt und bei Stillstand des Solarfahrrads 1 mit elektrischem Strom aufgeladen, den die Solarmodule 10 erzeugen.

In Umfangsrichtung weisen die Solarmodule 10 bzw. die Stränge von Solarmodulen 10 einen Abstand voneinander auf, der am Vorderrad 3 mindestens so groß wie und im Ausführungsbeispiel größer als eine Breite eines Umrisses einer Scheide 12 einer Fahrradgabel 13 axial zum Vorderrad 3 gesehen ist. Ein Abstand der Solarmodule 10 bzw. Stränge von Solarmodulen 10 in der Umfangsrichtung ist also mindestens so groß und im Ausführungsbeispiel größer als ein Durchmesser bzw. eine Dicke der Scheiden 12 der Vorderradgabel 13 axial zum Vorderrad 3 gesehen. Das stellt sicher, dass in jeder beliebigen Drehstellung des Vorderrads 3 die Scheiden 12 der Vorderradgabel 13 höchstens eine der in Umfangsrichtung verteilt angeordneten Solarmodule 10 (teil-) beschattet. Radial zueinander angeordnete Solarmodule 10 eines Strangs werden bei dieser Anordnung gleichzeitig von den Scheiden 12 der Fahrradgabel 13 (teil-) beschattet. Ein Schattenwurf der Scheiden 12 der Fahrradgabel 13 bei seitlichem Lichteinfall auf das Vorderrad 3 ist dadurch nicht breiter und im Ausführungsbeispiel schmaler als der Abstand der Solarmodule 10 in der Umfangsrichtung des Vorderrads 3. Alle anderen Solarmodule 10 des Vorderrads 3 erhalten bei seitlichem Lichteinfall unbehindert von den Scheiden 12 der Fahrradgabel 13 Sonnenlicht und erzeugen elektrischen Strom, der den Akkumulator 8 lädt. Bei einer Drehung des Vorderrads 3 werden die Solarmodule 10 nur kurz während eines Durchgangs durch die Vorderradgabel 13 von deren Scheiden 12 beschattet und erhalten während der übrigen Drehung unbehindert Sonnenlicht. Der Abstand der Solarmodule 10 in der Umfangsrichtung des Vorderrads 3 verhindert, dass mehr als eines der in Umfangsrichtung verteilt angeordneten Solarmodule 10 gleichzeitig (teil-) beschattet wird, nur radial zueinander angeordnete und elektrisch in Reihe geschaltete Solarmodule 10 eines Strangs werden gleichzeitig (teil-) beschattet. Dadurch wird eine elektrische Stromerzeugung mit guten Wirkungsgrad trotz der schattenwerfenden Scheiden 12 der Fahrradgabel 13 erreicht. Bei zehn in Umfangsrichtung verteilt und voneinander beabstandeten Solarmodulen 10 bzw. Strängen von Solarmodulen 10 beschattet die Scheide 12 der Fahrradgabel 13 höchstens ein Solarmodul 10 bzw. höchstens Solarmodule 10 eines Strangs. Die Solarstromerzeugung wird dadurch um höchstens 10 % gemindert.

Im Ausführungsbeispiel sind handelsübliche, rechteckige Solarmodule 10 verwendet, wobei zu einer guten Flächennutzung radial außen am Vorderrad 3 angeordnete Solarmodule 10 mit ihren Längsseiten in Richtung von Sekanten und radial innen angeordnete Solarmodule 10 mit ihren Längsseiten parallel zu Radialen angeordnet sind. Eine bessere Flächennutzung lässt sich mit Solarmodulen erreichen, deren Seiten schräg in radialer Richtung des Vorderrads 3 verlaufen. Das erfordert allerdings spezielle Solarmodule mit schrägen Seiten.

Im Ausführungsbeispiel sind die Solarmodule 10 unmittelbar an den nicht gezeichneten Speichen der Laufräder 2 befestigt. Allerdings können die Solarmodule 10 auch auf nicht gezeichneten Trägern befestigt sein, die ihrerseits an den Speichen der Laufräder 2 befestigt sind. Zwischen den Solarmodulen 10 sind die Laufräder 2 luftdurchlässig und halten dadurch eine Seitenwindempfindlichkeit niedrig. Werden Träger für die Solarmodule 10 verwendet, sind diese vorzugsweise keine Kreisscheiben, die die Laufräder 2 vollflächig abdecken, sondern nehmen in etwa die von den Solarmodulen 10 eingenommenen Flächen ein, so dass in Umfangsrichtung zwischen den Solarmodulen 10 die Laufräder 2 luftdurchlässig sind. Solche nicht gezeichneten, an den Speichen der Laufräder 2 befestigte Träger für die Solarmodule 10 sind also strahlenförmig angeordnet. Das gilt insbesondere für das Vorderrad 3, das eine Seitenwindempfindlichkeit des Solarfahrrads 1 stärker beeinflusst als das Hinterrad 4. Am Hinterrad 4 können die Solarmodule 10 auch auf kreisscheibenförmigen Trägern befestigt sein, die das Hinterrad 4 vollflächig abdecken.

Am Hinterrad 4 sind die Solarmodule 10 wie am Vorderrad 3 radial zueinander und in Umfangsrichtung verteilt und mit Abstand voneinander angeordnet. Radial zueinander angeordnete Solarmodule 10 eines Strangs sind im Hinterrad 4 wie im Vorderrad 3 elektrisch in Reihe miteinander und mit einer Diode 11 geschaltet. In Umfangsrichtung sind die Stränge von Solarmodulen 10 einschließlich ihrer Dioden 11 elektrisch parallel geschaltet. Die Dioden 11 verhindern, dass (teil-) beschattete Solarmodule 10, die keinen oder einen nur geringen elektrischen Strom erzeugen, die Stromerzeugung der übrigen Solarmodule 10 bzw. der übrigen Stränge von Solarmodulen 10 beeinträchtigen. Für den Abstand der Solarmodule 10 bzw. Stränge von Solarmodulen 10 am Hinterrad 4 gilt das entsprechende wie für das Vorderrad 3. Das Hinterrad 4 wird im Ausführungsbeispiel von zwei Rahmenstreben 14, einer von einer Radachse schräg nach oben verlaufenden Sattelstrebe 15 und einer von der Radachse horizontal nach vorn verlaufenden Kettenstrebe 16 abgedeckt. Der Abstand der Solarmodule 10 bzw. Stränge von Solarmodulen 10 in der Umfangsrichtung des Hinterrads 4 ist mindestens so groß wie und im Ausführungsbespiel größer als eine Breite eines Umrisses der Rahmenstreben 14 axial zum Hinterrad 4 gesehen, so dass eine Rahmenstrebe 14 in jeder beliebigen Drehstellung des Hinterrads 4 höchstens eines der in Umfangsrichtung verteilt angeordneten Solarmodule 10 (teil-) beschattet. Radial zueinander angeordnete Solarmodule 10 eines Strangs werden von einer Rahmenstrebe 14 gleichzeitig (teil-) beschattet. Maßgebend für den Abstand der Solarmodule 10 in der Umfangsrichtung des Hinterrads 4 ist die breitere, dickere bzw. durchmessergrößere Rahmenstrebe 14, sofern die Rahmenstreben 14 verschieden dick sind bzw. verschiedene Durchmesser aufweisen. Nicht ausgeschlossen ist, dass die beiden Rahmenstreben 14 zwei der in Umfangsrichtung des Hinterrads 4 verteilt angeordneten Solarmodule 10 bzw. Stränge von Solarmodulen 10 gleichzeitig (teil-) beschatten. Allerdings stellt die Erfindung sicher, dass jede Rahmenstrebe 14 nicht mehr als eines der in Umfangsrichtung des Hinterrads 4 verteilt angeordneten Solarmodule 10 bzw. nicht mehr als Solarmodule 10 eines Strangs gleichzeitig (teil-) beschattet.

Im Übrigen gelten für das Hinterrad 4 die Erläuterungen zur Anordnung und elektrischen Verschaltung der Solarmodule 10 am Vorderrad 3.

Im Ausführungsbeispiel weist der Akkumulator 8 eine Nennspannung von 36 V auf und die Stränge mit im Ausführungsbeispiel Solarmodule 10 eine darauf abgestimmte, etwas höhere Solarspannung von im Ausführungsbeispiel etwa 40 bis 42 V bei einem Strom von 340 mA.

## Patentansprüche

1. Solarfahrrad mit einem Laufrad (2), an dem seitlich Solarmodule (10) über einen Umfang verteilt angeordnet sind, die in einer Umfangsrichtung einen Abstand voneinander aufweisen, der mindestens so groß wie ein Schattenwurf einer dicksten, das Laufrad (2) seitlich überdeckenden Rahmenstrebe (14) oder Gabelscheide (12) auf das Laufrad (2) bei seitlichem Lichteinfall ist, **dadurch gekennzeichnet, dass** Solarmodule (10) als Stränge radial zueinander an dem Laufrad (2) angeordnet sind und dass als Strang radial zueinander an dem Laufrad (2) angeordnete Solarmodule (10) elektrisch in Reihe geschaltet sind.

2. Solarfahrrad nach Anspruch 1, **dadurch gekennzeichnet, dass** die als Strang radial zueinander am Laufrad (2) angeordneten und elektrisch in Reihe geschalteten Solarmodule (10) elektrisch mit einer Diode (11) in Reihe geschaltet sind.

3. Solarfahrrad nach Anspruch 1 oder 2, **dadurch gekennzeichnet, dass** Stränge radial zueinander angeordneter, elektrisch in Reihe geschalteter Solarmodule (10) einschließlich ihrer Dioden (11) in Umfangsrichtung elektrisch parallel geschaltet sind.

4. Solarfahrrad nach einem der vorhergehenden Ansprüche, **dadurch gekennzeichnet, dass** das Laufrad (2) zwischen den Solarmodulen (10) luftdurchlässig ist.

## Claims

1. Solar bicycle comprising a wheel (2), on the sides of which wheel solar modules (10) are arranged so as to be distributed over a circumference and have, in a circumferential direction, a spacing from one another that is at least as large as a shadow cast onto the wheel (2), in the case of incident light from the sides, by a thickest frame beam (14) or fork blade (12) that cover the sides of the wheel (2), **characterised in that** solar modules (10) are arranged radially with respect to one another as strands on the wheel (2) and **in that** solar modules (10) arranged radially with respect to one another as a strand on the wheel (2) are electrically connected in series.

2. Solar bicycle according to claim 1, **characterised in that** the solar modules (10) arranged radially with respect to one another as a strand on the wheel (2) and electrically connected in series are electrically connected in series to a diode (11).

3. Solar bicycle according to either claim 1 or claim 2, **characterised in that** solar modules (10) arranged radially with respect to one another as strands and electrically connected in series, including to the diodes (11) thereof, are electrically connected in parallel in the circumferential direction.

4. Solar bicycle according to any of the preceding claims, **characterised in that** air can pass between the solar modules (10) of the wheel (2).

## Revendications

1. Vélo solaire muni d'une roue (2) sur laquelle sont implantés latéralement, avec répartition sur une circonférence, des modules solaires (10) espacés les uns des autres, dans une direction circonférentielle, d'une distance au moins égale à une ombre projetée sur ladite roue (2), lors d'une incidence latérale de lumière, par une jambe de cadre (14) ou un bras de fourche (12) d'épaisseur maximale, couvrant latéralement ladite roue (2), **caractérisé par le fait que** des modules solaires (10) sont disposés radialement les uns par rapport aux autres sur la roue (2), en tant qu'enfilades ; et **par le fait que** des modules solaires (10), disposés radialement les uns par rapport aux autres sur la roue (2) en tant qu'enfilade, sont branchés électriquement en série.

2. Vélo solaire selon la revendication 1, **caractérisé par le fait que** les modules solaires (10), disposés radialement les uns par rapport aux autres sur la roue (2) en tant qu'enfilade, et branchés électriquement en série, sont branchés électriquement en série avec une diode (11).

3. Vélo solaire selon la revendication 1 ou 2, **caractérisé par le fait que** des enfilades de modules solaires (10) disposés radialement les uns par rapport aux autres et branchés électriquement en série, y compris leurs diodes (11), sont branchées électriquement en parallèle dans la direction circonférentielle.

4. Vélo solaire selon l'une des revendications précédentes, **caractérisé par le fait que** la roue (2) est perméable à l'air entre les modules solaires (10).
